# EUROPÄISCHE PATENTSCHRIFT

(11) **EP 4 295 068 B1**
(45) Veröffentlichungstag und Bekanntmachung des Hinweises auf die Patenterteilung: **24.12.2025**
(21) Anmeldenummer: 22700217.7
(22) Anmeldetag: 03.01.2022
(51) Int. Cl.: F16K 17/36, G01P 15/03

(54) **GASFÜHRENDE VORRICHTUNG MIT EINER SICHERHEITSVORRICHTUNG**
GAS-CONDUCTING DEVICE HAVING A SAFETY DEVICE
DISPOSITIF DE CONDUCTION DE GAZ AVEC DISPOSITIF DE SÛRETÉ

(30) Priorität: 22.02.2021 DE 102021000920
(43) Veröffentlichungstag der Anmeldung: 27.12.2023
(73) Patentinhaber: Truma Gerätetechnik GmbH & Co. KG, 85640 Putzbrunn (DE)
(72) Erfinder: STAHL, Bernhard, 85640 Putzbrunn (DE)
(74) Vertreter: Prinz & Partner mbB
(86) Internationale Anmeldenummer: PCT/EP2022/000002
(87) Internationale Veröffentlichungsnummer: WO 2022/174972

(56) Entgegenhaltungen:
- WO-A1-2020/030398
- DE-A1- 3 410 411
- GB-A- 1 314 009
- JP-A- H11 255 095
- JP-A- H11 255 095
- US-A- 4 760 858
- US-A1- 2013 048 774

## Beschreibung

Die vorliegende Erfindung betrifft eine gasführende Vorrichtung mit einer Sicherheitsvorrichtung zur Unterbrechung eines Gasflusses in der gasführenden Vorrichtung, mit einem Trägheitskörper, einem Stempel und einem Gehäuse, wobei das Gehäuse einen Gehäuseboden aufweist, wobei der Trägheitskörper sich in einem Ruhezustand auf einer Ruhestelle des Gehäusebodens befindet, sodass der Stempel auf dem Trägheitskörper ruht, und wobei der Trägheitskörper sich in einem Aktivierungszustand bei einer auf den Trägheitskörper wirkenden Beschleunigung oberhalb eines vorgebbaren Grenzwerts aus der Ruhestelle bewegt, sodass sich der Stempel in Richtung des Gehäusebodens bewegt und die Sicherheitsvorrichtung den Gasfluss unterbricht.

Im Stand der Technik sind unterschiedliche Vorrichtungen oder Ventile bekannt, die den Durchfluss eines Fluids, z. B. einer Flüssigkeit oder eines Gases, in Ausnahmesituationen unterbrechen. Dabei werden oft Trägheitskörper verwendet, die sich im Normalzustand in einem labilen Gleichgewicht befinden und in dem Fall, dass eine Kraft oder Beschleunigung oberhalb eines vorgebbaren Grenzwerts auf sie einwirkt, den Fluss des Fluids unterbrechen.

Die EP 2 096 340 B1 offenbart ein von einem Fluid durchströmtes Ventil mit einer Sicherheitsvorrichtung. Die Sicherheitsvorrichtung verfügt über einen Trägheitskörper, eine Energiespeichervorrichtung, eine Bewegungseinrichtung und eine Verschlusseinheit. Der Trägheitskörper verhindert im Normalzustand, dass die Energiespeichervorrichtung Energie an die Bewegungseinrichtung abgibt und somit über die Verschlusseinheit das Strömen des Fluids unterbricht. Kippt das Ventil z. B. bei einem Unfall, so folgt der Trägheitskörper der Bewegung und erlaubt der Energiespeichervorrichtung die Übertragung der gespeicherten Energie auf die Bewegungseinrichtung. Das Ventil verfügt zudem über eine Rückstelleinrichtung, über die ein Bediener die Verschlusseinheit in den geöffneten Zustand zurückversetzen kann.

Eine Sicherheitsvorrichtung offenbart die WO 2020/030405 A1, in welcher im Ruhezustand ein Stempel auf dem Trägheitskörper ruht. Bewegt sich der Trägheitskörper infolge einer Beschleunigung, die einen Grenzwert übersteigt, so senkt sich der Stempel und eine auf dem Stempel ruhende Achse kann sich drehen. Die Bewegung der Achse wirkt sich auf das eigentliche Ventil aus und unterbricht dort das Strömen des Gases durch das Ventil.

Ein Ventil, das bei einem Erdbeben automatisch schließt, offenbart die JP H09-210 230 A. Dabei ruht ein Trägheitskörper auf einem Stempel. Ein ähnliches Ventil, welches bei Vibrationen schließt, offenbart die JP H11-13 915 A.

Einen Beschleunigungssensor mit einem Rollkörper, der sich in einem Aufnahmeelement befindet, offenbart die DE 34 10 411 A1. Das Aufnahmeelement ist dabei mit Rippen versehen.

Aus der JP H11 255095 A ist ein Bremsflüssigkeitsdruckregelventil bekannt, mit dem der einem Radzylinder zugeführte Bremsflüssigkeitsdruck eingestellt werden kann.

Die der Erfindung zugrundeliegende Aufgabe besteht darin, eine gasführende Vorrichtung mit einer Sicherheitsvorrichtung vorzuschlagen, bei welcher eine Bewegung des Trägheitskörpers nach einer starken Beschleunigung optimiert ist.

Die Erfindung löst die Aufgabe dadurch, dass der Gehäuseboden mindestens eine Leitstruktur aufweist, und dass die Leitstruktur den Trägheitskörper im Aktivierungszustand zu einer Auslenkungsstelle des Gehäusebodens leitet, wobei die Leitstruktur im Wesentlichen in der Form eines Abschnitts eines Mantels eines Zylinders ausgestaltet ist, wobei eine Längsachse des Zylinders versetzt zu einer Hochachse ist, die senkrecht auf dem Gehäuseboden steht, wobei die Ruhestelle symmetrisch um die Hochachse ausgebildet ist, und wobei der Gehäuseboden angrenzend an die Ruhestelle ansteigend ausgestaltet ist, und die Leitstruktur eine geringere Steigung als zur Leitstruktur seitlich benachbarte Abschnitte autweist. Verlässt im Aktivierungszustand der Trägheitskörper infolge der einwirkenden Kraft die Ruhestelle, so wird der Trägheitskörper durch eine Leitstruktur zu einer Auslenkungsstelle geleitet. Die Auslenkungsstelle ist dabei in einer Ausgestaltung in einem die Ruhestelle umgebenden Bereich des Gehäusebodens befindlich. Die Geometrie der Leitstruktur ist durch eine Zylinderform bedingt und durch einen Abschnitt der Mantelfläche gegeben. Die Längsachse in Bezug auf die Orientierung zur Ruhestelle ist versetzt zu einer Hochachse der Ruhestelle. Die Hochachse steht dabei senkrecht auf dem Gehäuseboden. Der Zylinder geht somit nicht radial von diesem zentralen Bereich des Gehäusebodens aus. Da der Gehäuseboden angrenzend an die Ruhestelle ansteigend ausgestaltet ist, und die Leitstruktur eine geringere Steigung als zur Leitstruktur seitlich benachbarte Abschnitte aufweist, ist die Ruhestelle insgesamt ein Tal, in welchem sich der Trägheitskörper im Ruhezustand befindet. Umgeben ist die Ruhestelle von der ansteigenden Struktur des Gehäusebodens. Damit wird zum einen sichergestellt, dass sich der Trägheitskörper nicht bei jeglicher Krafteinwirkung aus der Ruhestelle bewegt, sondern nur beim Überschreiten des Grenzwerts. Zum anderen wird durch diese Geometrie eine einfache und in der Regel zuverlässige Realisierung der Zurücksetzung der Sicherheitsvorrichtung ermöglicht, da der Trägheitskörper durch die Erdanziehung wieder in den Ruhezustand zurückkehrt. Der Trägheitskörper bewegt sich somit im Aktivierungszustand von der Ruhestelle jeweils entgegen der Erdanziehungskraft nach oben. Dabei ist der an die Ruhestelle angrenzende - und ihn insbesondere umgebende - Bereich nicht homogen, sondern verfügt über Abschnitte mit unterschiedlichen Steigungen. Die Leitstruktur unterscheidet sich von den anderen Abschnitten und zumindest von den an die Leitstruktur seitlich angrenzenden Abschnitten durch eine geringere Steigung.

Die Neigung der Längsachse des kreiszylindrischen Zylinders ist dabei in einer Ausgestaltung so gewählt, dass sich insgesamt eine zunehmende Steigung des an die Ruhestelle anschließenden Bereichs ergibt, dass jedoch diese Steigung geringer als die der benachbarten Bereiche ist.

Eine Ausgestaltung besteht darin, dass der Gehäuseboden eine beschränkte Anzahl von Auslenkungsstellen aufweist. Bei dieser Ausgestaltung verfügt der Gehäuseboden, auf dem sich der Trägheitskörper befindet, über eine Ruhestelle und über eine beschränkte (oder diskrete) Anzahl von Auslenkungsstellen. In einer Ausgestaltung sind vier Auslenkungsstellen vorhanden.

Gemäß einer mit der vorhergehenden Ausgestaltung einhergehenden Ausgestaltung ist jeder Auslenkungsstelle eine Leitstruktur zugeordnet. In dieser Ausgestaltung wird der Trägheitskörper im Fall des Aktivierungszustands von mehreren Leitstrukturen zu jeweils einer Auslenkungsstelle geleitet.

Eine Ausgestaltung besteht darin, dass die Ruhestelle sich im Wesentlichen mittig in dem Gehäuseboden befindet. In einer weiteren Ausgestaltung ist der Weg von der Ruhestelle zu jeder der Auslenkungsstellen gleich lang.

Erfindungsgemäß ist die Ruhestelle im Wesentlichen symmetrisch um eine Hochachse ausgestaltet. Die Hochachse steht dabei senkrecht auf dem Gehäuseboden. Insofern die - z. B. bei einem Unfall oder einem Erdbeben - wirkenden Kräfte aus unterschiedlichen Richtungen kommen können, erlaubt die Symmetrie, dass der Trägheitskörper unabhängig von der Richtung der wirkenden Kraft reagiert.

Gemäß einer Ausgestaltung ist die Ruhestelle im Wesentlichen kegelförmig ausgestaltet. Der Kegel ist dabei derartig angeordnet, sodass der Trägheitskörper im Ruhezustand in dem Kegel liegt und ein Anstiegswinkel in alle Richtungen gleich ist. Durch die Ausführung des Trägheitskörpers und der Dimensionierung des Kegels kann der Grenzwert eingestellt werden, bei dessen Überschreiten der Trägheitskörper ausgelenkt wird.

In einer Ausgestaltung sind mindestens zwei diametral einander gegenüberliegende Auslenkungsstellen vorhanden, wobei jeder Auslenkungsstelle eine Leitstruktur mit der vorgenannten Zylinderform zugeordnet ist. Die Längsachse der Zylinder sind jeweils so orientiert, sodass ein Versatz zu der Diagonale zwischen den Auslenkungsstellen besteht.

Eine Ausgestaltung besteht darin, dass der Gehäuseboden über eine mehrere Ecken aufweisende Grundfläche verfügt, und dass sich die Auslenkungsstellen in Nähe der Ecken befinden. In einer Ausgestaltung handelt es sich insbesondere um eine viereckige Grundfläche. Dabei ist jeder Ecke der Grundfläche eine Auslenkungsstelle zugeordnet. Befindet sich die Ruhestelle in der Mitte der Grundfläche, so umfassen die Ecken jeweils die am weitesten von der Grundfläche befindlichen Bereiche. Damit führt die Leitstruktur in dieser Ausgestaltung den Trägheitskörper in jeweils eine von diesen Ecken.

Eine Ausgestaltung der gasführenden Vorrichtung sieht vor, dass die Vorrichtung als Gasdruckregler ausgestaltet ist. Ein Druckregler dient dazu, um einen an einer Seite anliegenden Hochdruck auf einen niedrigeren Ausgangsdruck zu reduzieren.

Im Einzelnen gibt es eine Vielzahl von Möglichkeiten, die gasführende Vorrichtung auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigen:
Fig. 1 eine schematische Darstellung einer gasführenden Vorrichtung mit einer Sicherheitsvorrichtung,
Fig. 2 einen Ausschnitt einer Ausgestaltung einer Sicherheitsvorrichtung gemäß dem Stand der Technik,
Fig. 3 eine räumliche Darstellung des Gehäusebodens einer erfindungsgemäßen Sicherheitsvorrichtung,
Fig. 4 einen Blick auf den Boden der Fig. 3,
Fig. 5 einen Schnitt durch den Boden und
Fig. 6 eine angeschnittene räumliche Darstellung des Gehäusebodens.

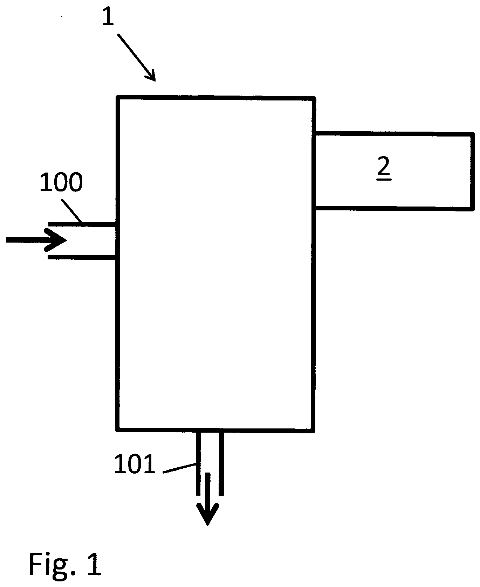

Die Fig. 1 zeigt schematisch eine gasführende Vorrichtung 1 mit einem Gaseingang 100 und einem Gasausgang 101. Dabei handelt es sich beispielsweise um einen Druckregler, der den am Eingang 100 anliegenden Gasdruck reduziert. Die Vorrichtung 1 wird beispielsweise in einem Wohnwagen oder einem Wohnmobil angewendet. Für den Fall, dass das Ventil 1 während der Fahrt offen ist, damit z. B. eine Heizung betrieben werden kann, und dass sich dabei ein Autounfall ereignet, ist die Sicherheitsvorrichtung 2 vorhanden. Die Sicherheitsvorrichtung 2 reagiert auf eine Beschleunigung, wie sie beispielsweise bei einem Unfall einwirkt und verschließt die Vorrichtung 1, sodass kein Gas mehr durch sie hindurchfließen kann.

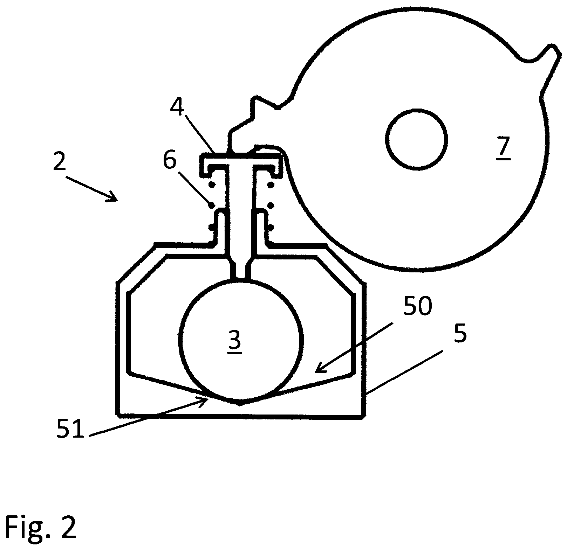

Die in der Fig. 2 dargestellte Ausführung der Sicherheitsvorrichtung 2 ist beschrieben in der WO 2020/030405 A1. Gezeigt ist hier der Ruhe- oder Normalzustand, in welchem die Sicherheitsvorrichtung 2 den Gasfluss nicht sperrt.

Ein Trägheitskörper 3, hier in Form einer Kugel, befindet sich in einem Gehäuse 5. Ein Stempel 4 ruht auf dem Trägheitskörper 3. Auf den Stempel 4 wirkt einerseits eine Feder 6 und andererseits ein Reaktionsmechanismus 7. Der Reaktionsmechanismus 7 ist dabei mit einer - hier nicht dargestellten - Achse verbunden. Der Stempel 4 verhindert dabei, dass sich der Reaktionsmechanismus 7 - hier zeichnerisch - entgegen der Uhrzeigerrichtung drehen kann. Somit wirkt von unten die Kraft der Feder 6 nach oben und wirkt von oben der Reaktionsmechanismus 7 nach unten auf den Stempel 4. Die Kräfteverhältnisse sind so eingestellt, dass die Kraft des Reaktionsmechanismus 7 größer als die der Feder 6 ist. Dies kann sich jedoch im - hier gezeigten - Ruhezustand nicht auswirken, da sich der Trägheitskörper 3 unterhalb des Stempels 4 befindet und daher die Bewegung des Stempels 4 nach unten blockiert. Daher ist der Stempel 4 auch in dem Gehäuse 5 geführt.

Der Trägheitskörper 3 befindet sich auf dem Gehäuseboden 50 auf einer Ruhestelle 51. Die Ruhestelle 51 liegt hier unterhalb des Stempels 4. Wirkt eine Beschleunigung oberhalb eines durch die verwendeten Bauteile einstellbaren Grenzwerts auf den Trägheitskörper 3, so bewegt sich der Trägheitskörper 3 fort von der Ruhestelle 51. Damit wird dem Stempel 4 der Weg in Richtung des Gehäusebodens 50 bzw. hinein in das Gehäuse 5 nicht mehr versperrt und der Reaktionsmechanismus 7 kann seine Drehung ausführen. Damit ist verbunden, dass der Gasfluss in der Vorrichtung, wie sie in der Fig. 1 dargestellt ist, unterbrochen wird.

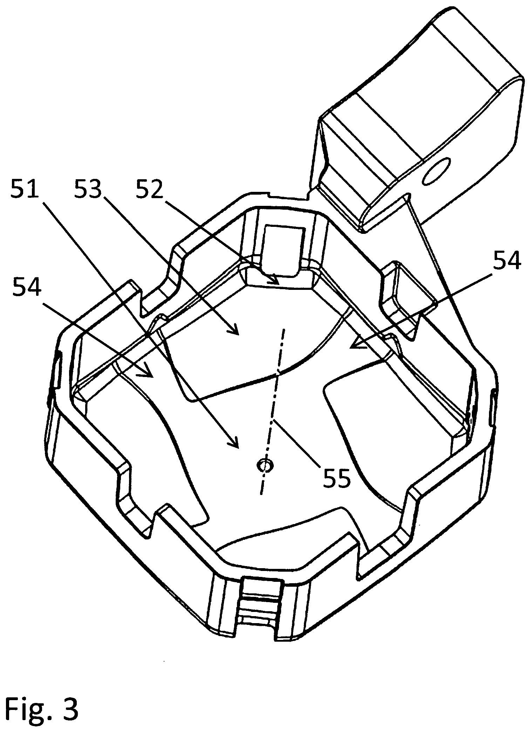

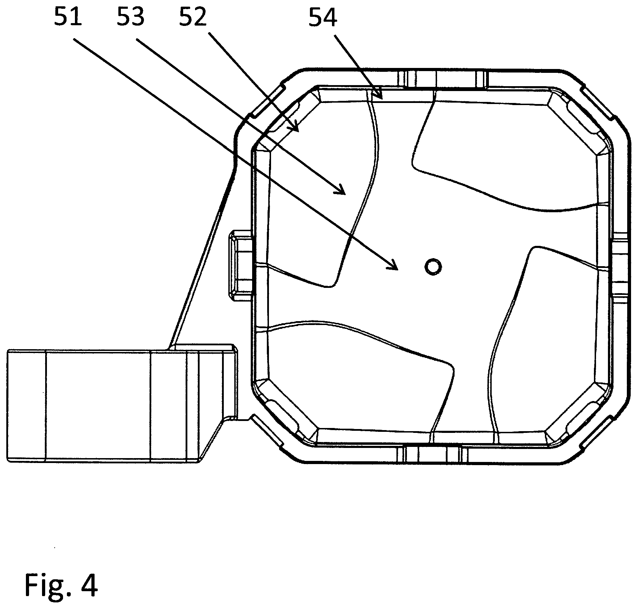

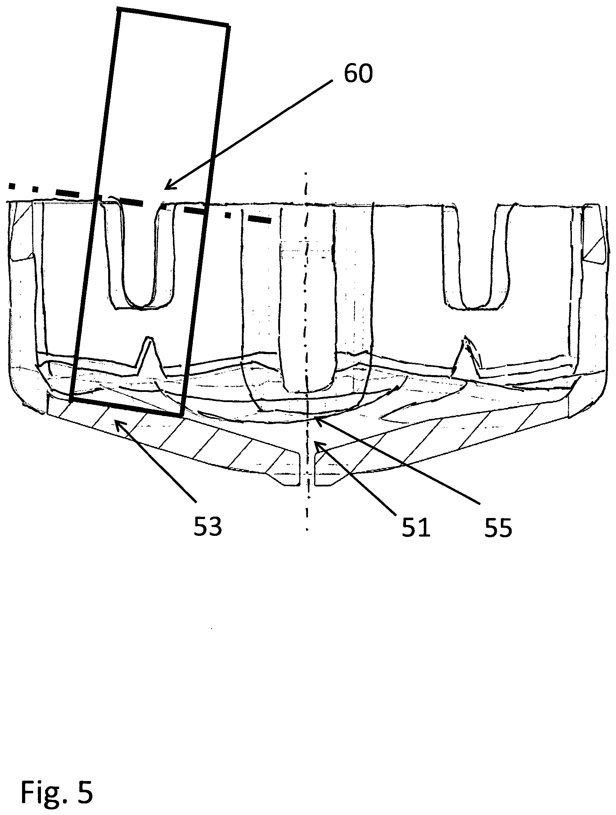

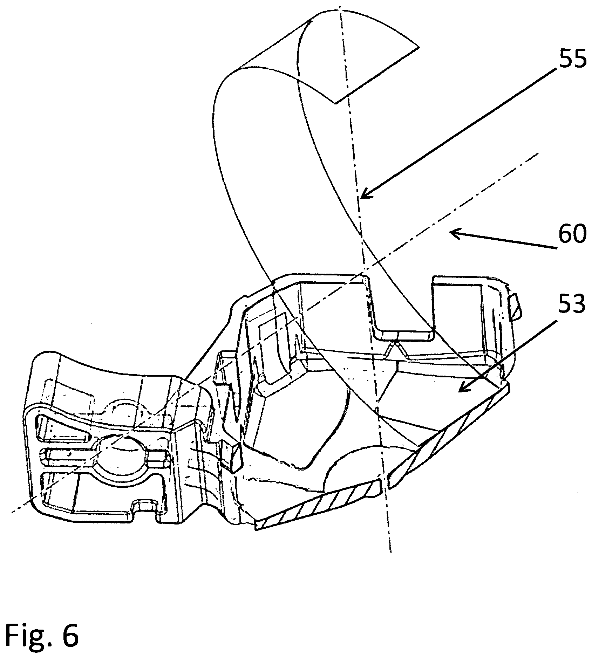

Die Fig. 3 und Fig. 4 erlauben jeweils einen Blick in ein Unterteil eines Gehäuses einer erfindungsgemäßen Sicherheitsvorrichtung 2. Die Fig. 5 und Fig. 6 zeigen jeweils Teile des Unterteils, wobei ein Zylinder eingezeichnet ist, durch den sich die Form der Leitstruktur 53 ergibt. Die vier Abbildungen werden gemeinsam diskutiert.

Die Grundfläche des Gehäusebodens 50 ist ein Viereck. In jeder der vier Ecken befindet sich eine Auslenkungsstelle 52. In der Mitte befindet sich die Ruhestelle 51, welche eine konische Form aufweist.

Der - hier nicht dargestellte - Trägheitskörper bewegt sich im Aktivierungszustand, also wenn eine entsprechende Kraft einwirkt, von der Ruhestelle 51 zu einer der vier Auslenkungsstellen 52. Dabei wird der Trägheitskörper durch die vier Leitstrukturen 53 geführt, die an die Ruhestelle 51 angrenzen. Der Trägheitskörper 3 bewegt sich dabei von der in dem Gehäuseboden 50 an der tiefsten Stelle gelegenen Ruhestelle 51 nach oben.

Zwischen den vier Leitstrukturen 53 befinden sich benachbarte Abschnitte 54. Gemein ist den Leitstrukturen 53 und den benachbarten Abschnitten 54, dass sie jeweils positiv ansteigend sind. Der Unterschied zwischen Leitstrukturen 53 und benachbarten Abschnitten 54 besteht darin, dass die Leitstrukturen 53 eine geringere Steigung haben, sodass der Trägheitskörper nach dem Verlassen der Ruhestelle 51 eher in die Leitstrukturen 53 hineinrollt und diesen dann bis zu den Auslenkungsstellen 52 folgt.

Die Form der Auslenkungsstellen 52 ist jeweils durch einen Abschnitt eines Mantels eines Kreiszylinders gegeben. In den Fig. 5 und Fig. 6 ist jeweils ein Zylinder eingezeichnet, der die Kegelform des Bodens schneidet. Die Längsachse 60 des Kreiszylinders verläuft dabei an der Hochachse 55 vorbei, schneidet sie also insbesondere nicht. Die Hochachse 55 steht dabei auf dem Mittelpunkt der Ruhestelle 51 senkrecht, die hier auch der tiefste Punkt des Gehäusebodens 50 ist. In der Fig. 6 liegt die Längsachse 60 hinter der Hochachse 55.

In der Fig. 5 wird deutlich, dass die Leitstruktur 53 zunächst seitlich mit einer durch die Kegelform des Bodens gegebenen ersten Steigung ansteigt, um sich dann mit einer zweiten, durch die geneigte Zylindermantelfläche gegebenen kleineren Steigung weiter nach außen zu erheben. Zu erkennen ist insbesondere, wie sich durch den eingezeichneten Zylinder ein Abknicken der Kegelform des Bodens ergibt, sodass der Trägheitskörper in Richtung der Auslenkungsstelle 52 geführt wird. In der gezeigten Ausgestaltung ergibt sich die Geometrie der Leitstruktur 53 durch den Kreiszylinder.

### Bezugszeichenliste

- **1**: Gasführende Vorrichtung
- **2**: Sicherheitsvorrichtung
- **3**: Trägheitskörper
- **4**: Stempel
- **5**: Gehäuse
- **6**: Feder
- **7**: Reaktionsmechanismus
- **50**: Gehäuseboden
- **51**: Ruhestelle
- **52**: Auslenkungsstelle
- **53**: Leitstruktur
- **54**: benachbarter Abschnitt
- **55**: Hochachse
- **60**: Längsachse des Zylinders
- **100**: Gaseingang
- **101**: Gasausgang

## Patentansprüche

1. Gasführende Vorrichtung (1) mit einer Sicherheitsvorrichtung (2) zur Unterbrechung eines Gasflusses in der gasführenden Vorrichtung (1),
mit einem Trägheitskörper (3), einem Stempel (4) und einem Gehäuse (5),
wobei das Gehäuse (5) einen Gehäuseboden (50) aufweist,
wobei der Trägheitskörper (3) sich in einem Ruhezustand auf einer Ruhestelle (51) des Gehäusebodens (50) befindet, sodass der Stempel (4) auf dem Trägheitskörper (3) ruht, und
wobei der Trägheitskörper (3) sich in einem Aktivierungszustand bei einer auf den Trägheitskörper (3) wirkenden Beschleunigung oberhalb eines vorgebbaren Grenzwerts aus der Ruhestelle (51) bewegt, sodass sich der Stempel (4) in Richtung des Gehäusebodens (50) bewegt und die Sicherheitsvorrichtung (2) den Gasfluss unterbricht,
wobei der Gehäuseboden (50) mindestens eine Leitstruktur (53) aufweist,
wobei die Leitstruktur (53) den Trägheitskörper (3) im Aktivierungszustand zu einer Auslenkungsstelle (52) des Gehäusebodens (50) leitet,
wobei die Leitstruktur (53) in der Form eines Abschnitts eines Mantels eines Zylinders ausgestaltet ist, und
wobei eine Längsachse (60) des Zylinders versetzt zu einer Hochachse (55) ist, die senkrecht auf dem Gehäuseboden (50) steht, wobei die Ruhestelle (51) symmetrisch um die Hochachse (55) ausgebildet ist, **dadurch gekennzeichnet, dass** der Gehäuseboden (50) angrenzend an die Ruhestelle (51) ansteigend ausgestaltet ist, und die Leitstruktur (53) eine geringere Steigung als zur Leitstruktur (53) seitlich benachbarte Abschnitte (54) aufweist.

2. Vorrichtung (1) nach Anspruch 1, wobei der Gehäuseboden (50) eine beschränkte Anzahl von Auslenkungsstellen (52) aufweist, und wobei jeder Auslenkungsstelle (52) eine Leitstruktur (53) zugeordnet ist.

3. Vorrichtung (1) nach Anspruch 1 oder 2, wobei die Ruhestelle (51) sich mittig in dem Gehäuseboden (50) befindet.

4. Vorrichtung (1) nach einem der Ansprüche 1 bis 3, wobei die Ruhestelle (51) kegelförmig ausgestaltet ist.

5. Vorrichtung (1) nach einem der Ansprüche 2 bis 4, wobei der Gehäuseboden (50) über eine mehrere Ecken aufweisende Grundfläche verfügt, und wobei sich die Auslenkungsstellen (52) in Nähe der Ecken befinden.

6. Vorrichtung (1) nach einem der Ansprüche 1 bis 5, wobei die Vorrichtung (1) als Gasdruckregler ausgestaltet ist.

## Claims

1. A gas-conducting device (1) comprising a safety device (2) for interrupting a gas flow in the gas-conducting device (1),
having an inertia body (3), a plunger (4), and a housing (5),
the housing (5) including a housing bottom (50),
wherein, in a resting state, the inertia body (3) is located on a resting place (51) of the housing bottom (50), so that the plunger (4) rests on the inertia body (3), and
wherein the inertia body (3) moves out of the resting place (51) in an activation state in the case of an acceleration above a predefinable limit value acting on the inertia body (3), so that the plunger (4) moves toward the housing bottom (50) and the safety device (2) interrupts the gas flow,
the housing bottom (50) including at least one guiding structure (53),
the guiding structure (53) guiding the inertia body (3) in the activation state to a deflection point (52) of the housing bottom (50),
the guiding structure (53) being designed in the shape of a section of a jacket of a cylinder, and
wherein a longitudinal axis (60) of the cylinder is offset in relation to a vertical axis (55), which is perpendicular to the housing bottom (50), the resting place (51) being configured to be symmetrical about the vertical axis (55), **characterized in that** the housing bottom (50) has an ascending design adjacent to the resting place (51), and a slope of the guiding structure (53) is less than that of sections (54) laterally neighboring the guiding structure (53).

2. The device (1) according to claim 1, wherein the housing bottom (50) has a limited number of deflection points (52), and wherein each deflection point (52) has a guiding structure (53) assigned to it.

3. The device (1) according to claim 1 or 2, wherein the resting place (51) is located centrally in the housing bottom (50).

4. The device (1) according to any of claims 1 to 3, wherein the resting place (51) is designed to be cone-shaped.

5. The device (1) according to any of claims 2 to 4, wherein the housing bottom (50) has a base area having a plurality of corners, and wherein the deflection points (52) are located in the vicinity of the corners.

6. The device (1) according to any of claims 1 to 5, wherein the device (1) is configured as a gas pressure regulator.

## Revendications

1. Dispositif (1) conducteur de gaz comprenant un dispositif de sécurité (2) pour interrompre un flux de gaz dans le dispositif (1) conducteur de gaz,
comprenant un corps inertiel (3), un plongeur (4) et un boîtier (5),
le boîtier (5) présentant un fond de boîtier (50),
le corps inertiel (3) se trouvant, à l'état de repos, sur un point de repos (51) du fond de boîtier (50), de sorte que le plongeur (4) repose sur le corps inertiel (3), et
le corps inertiel (3), dans un état d'activation, se déplaçant hors du point de repos (51) lors d'une accélération agissant sur le corps inertiel (3) au-delà d'une valeur limite pré-définissable, de sorte que le plongeur (4) se déplace vers le fond de boîtier (50) et le dispositif de sécurité (2) interrompt le flux de gaz,
le fond de boîtier (50) présentant au moins une structure de guidage (53),
la structure de guidage (53) guidant le corps inertiel (3) dans l'état d'activation vers un point de déviation (52) du fond de boîtier (50),
la structure de guidage (53) étant réalisée sous forme de tronçon d'une enveloppe d'un cylindre, et
un axe longitudinal (60) du cylindre étant décalé par rapport à un axe vertical (55) qui est perpendiculaire au fond de boîtier (50), le point de repos (51) étant réalisé de manière symétrique par rapport à l'axe vertical (55), **caractérisé en ce que** le fond de boîtier (50) est réalisé de manière ascendante au voisinage du point de repos (51), et la structure de guidage (53) présentant une pente plus faible que des tronçons (54) latéralement adjacents à la structure de guidage (53).

2. Dispositif (1) selon la revendication 1, le fond de boîtier (50) présentant un nombre limité de points de déviation (52), et chaque point de déviation (52) présentant une structure de guidage (53) associée.

3. Dispositif (1) selon la revendication 1 ou 2, le point de repos (51) se trouvant au centre du fond de boîtier (50).

4. Dispositif (1) selon l'une des revendications 1 à 3, le point de repos (51) étant réalisé de manière conique.

5. Dispositif (1) selon l'une des revendications 2 à 4, le fond de boîtier (50) présentant une surface de base comportant plusieurs angles, et les points de déviation (52) se trouvant à proximité des angles.

6. Dispositif (1) selon l'une des revendications 1 à 5, le dispositif (1) étant réalisé sous forme de régulateur de pression de gaz.
